# EUROPÄISCHE PATENTSCHRIFT

(11) **EP 1 926 369 B1**
(45) Veröffentlichungstag und Bekanntmachung des Hinweises auf die Patenterteilung: **17.06.2015**
(21) Anmeldenummer: 06791755.9
(22) Anmeldetag: 31.08.2006
(51) Int. Cl.: A01N 37/36, A01N 25/30

(54) **VERWENDUNG VON LAKTATESTERN ZUR VERBESSERUNG DER WIRKUNG VON PFLANZENSCHUTZMITTELN**
USE OF LACTATE ESTERS FOR IMPROVING THE ACTION OF AGRICULTURAL PESTICIDES
UTILISATION D'ESTERS DE LACTATE POUR AMELIORER L'ACTION DE PRODUITS PHYTOSANITAIRES

(30) Priorität: 09.09.2005 DE 102005042876
(43) Veröffentlichungstag der Anmeldung: 04.06.2008
(73) Patentinhaber: Bayer Intellectual Property GmbH, 40789 Monheim am Rhein (DE)
(72) Erfinder: BAUR, Peter, 86938 Schondorf (DE); DAVIES, Lorna, Elizabeth, 40489 Düsseldorf (DE); PONTZEN, Rolf, 42799 Leichlingen (DE); RÖCHLING, Andreas, 40764 Langenfeld (DE)
(74) Vertreter: BIP Patents
(86) Internationale Anmeldenummer: PCT/EP2006/008513
(87) Internationale Veröffentlichungsnummer: WO 2007/028538

(56) Entgegenhaltungen:
- EP-A1- 0 113 857
- WO-A-91/14366
- WO-A-96/22020
- WO-A-03/075657
- US-A1- 2004 253 287
- US-A1- 2006 199 736
- DATABASE CAPLUS [Online] CHEMICAL ABSTRACTS SERVICE, COLUMBUS, OHIO, US; VAN DER POL, J. F. ET AL: "Phytotoxicity and adjuvancy of lactate esters in 2,4-D based agrochemical formulations" XP002425214 gefunden im STN Database accession no. 2006:39198 & CONGRESS PROCEEDINGS - BCPC INTERNATIONAL CONGRESS: CROP SCIENCE & TECHNOLOGY, GLASGOW, UNITED KINGDOM, OCT. 31-NOV. 2, 2005 , VOLUME 1, 447-452 PUBLISHER: BRITISH CROP PROTECTION COUNCIL, ALTON, UK. CODEN: 69HSFT; ISBN: 1-901396-65-7, 2005,

## Beschreibung

Die Erfindung betrifft die Verwendung von Laktatestern in Pflanzenschutzmitteln zur Verbesserung der Wirkung auf der Ebene der Pflanzen.

WO 91/14366 beschreibt Laktat und Laktat-Derivate als Wirkstoffe, die das Wachstum von Weintrauben regulieren. Die Substanzen werden hier in einer festgelegten Dosierund ohne weitere Zusätze direkt in Wasser angesetzt und als Blattspritzlösung in einem Frühen Wachstumsstadium der Weintrauben verwendet. Der Einsatz von Laktatderivaten zur Verbesserung der Wirkung von Pflanzenschutzmitteln auf der Ebene der Pflanzen wird in diesem Dokument weder offenbart noch nahelegt.

In WO 00/18227 werden Alkyllaktate in hohen Konzentrationen als Suspensionsmittel für nicht lösliche agrochemische Wirkstoffe in nicht-wässrigen Suspensionskonzentraten beschrieben. Der Einsatz von Alkyllaktaten zur Verbesserung der Wirkung auf der Ebene der Pflanzen wird in diesem Dokument weder offenbart noch nahe gelegt.

In WO 03/075651 werden Laktatester in hohen Konzentrationen als Kristallisations-inhibitoren und Lösungsmittel für nicht lösliche agrochemische Wirkstoffe, insbesondere Azol-Fungizide beschrieben. Der Einsatz von Laktatestern zur Verbesserung der Wirkung auf der Ebene der Pflanzen wird in diesem Dokument weder offenbart noch nahegelegt.

WO 96/22020 beschreibt die Verwendung von aliphatischen Estern als Penetrationsförderer. In dieser Anmeldung werden zwar auch Laktatester offenbart, jedoch fallen die erfindungsgemäßen Ester nicht unter die dort offenbarte Formel. Offenbarte Laktatester sind von den erfindungsgemäßen Estern strukturell deutlich verschieben. Die Verwendung der erfindungsgemäßen Laktatestern und die Verbesserung der Retention von Spritzbrühen durch Laktatester wird in diesem Dokument weder offenbart noch nahegelegt.

US-A-2004/0253287 offenbart Insektizid-Formulierungen enthaltend Alkyllactate und die dadurch erreichbare verbesserte biologische Abbaubarkeit sowie verbesserte Handhabbarkeit durch Vermeidung von Hautreizungen. US-A-2004/0253287 enthält jedoch keine Hinweise auf eine verbesserte Penetrationswirkung.

WO-A-1996/022020 offenbart agrochemische Formulierungen enthaltend Myristyl- oder Lauryllaktat und deren Einfluss auf die Penetration der agrochemischen Wirkstoffe. WO-A-1996/022020 offenbart aber keine C₄ - C₈ - Laktatester und die dadurch erzielbaren verbesserten Penetrationseigenschaften.

EP-A-113857 offenbart Herbizid-Formulierungen enthaltend Milchsäureethylester als Spreitmittel. EP-A-113857 offenbart jedoch nicht den Einsatz von Milchsäureethylester zur Verbesserung der Penetrationen der agrochemischen Wirkstoffe.

Es wurde nun überraschend gefunden, dass die Wirkung von Pflanzenschutzmitteln auf der Ebene der Pflanzen signifikant durch bestimmte Laktatestern verbessert wird. So fördern die erfindungsgemäßen Laktatester sowohl den Verbleib der Spritzbrühe der erfindungsgemäßen Pflanzenschutzmittel auf der Pflanze, vor allem den Blättern (verbesserte Retention), als auch das Eindringen der in den Pflanzenschutzmitteln enthaltenen agrochemischen Wirkstoffe in die Pflanze (verbesserte Penetration). Diese Verbesserung der Eigenschaften wird bereits bei Konzentrationen von Laktatestern erreicht, bei denen diese noch keine Lösungsmittelfunktion übernehmen. Besonders vorteilhaft ist dabei auch, dass Laktatester ökologisch unbedenklich sind.

Gegenstand der Erfindung ist daher die Verwendung von Laktatestern der Formel (I) 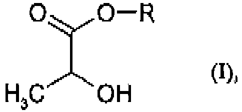 worin
- R: für unverzweigtes oder verzweigtes, gesättigtes oder ungesättigtes C₄-C₈-Alkyl steht,
zur Verbesserung der Wirkung von Pflanzenschutzmitteln auf der Ebene der Pflanze.

Die für die erfindungsgemäße Verwendung geeigneten Laktatester sind durch die Formel (I) allgemein definiert. Bevorzugte Restedefinitionen der vorstehenden und nachfolgend genannten Formeln sind im Folgenden angegeben:
- R: steht besonders bevorzugt für unverzweigtes oder verzweigtes, gesättigtes oder ungesättigtes C₆-C₈-Alkyl,
- R: steht ganz besonders bevorzugt für unverzweigtes oder verzweigtes, gesättigtes Octyl.
- R: steht insbesondere bevorzugt für 1-Ethyl-Hexyl, 2-Ethyl-Hexyl, 3-Ethyl-Hexyl, 4-Ethyl-Hexyl, 1-Methyl-Heptyl, 2-Methyl-Heptyl, 3-Methyl-Heptyl, 4-Methyl-Heptyl, 5-MethylHeptyl, 6-Methyl-Heptyl oder n-Octyl.

Hervorgehoben wird die Verbindung der Formel (I), in der R für 2-Ethylhexyl steht.

Die Verbindungen der Formel (I) werden einzeln oder in Form von Gemischen eingesetzt. Wird in der Beschreibung oder den Ansprüchen von Laktatester gesprochen, so sind ausdrücklich einzelne erfindungsgemäße Verbindungen oder Mischungen von mehreren erfindungsgemäßen Verbindungen gemeint.

Die Laktatester der Formen (I) sind bekannt und kommerziell erhältlich oder können nach algemein bekannten Methoden hergestellt werden.

Die erfindungsgemäß verwendeten Laktatestern können gegebenenfalls als Mischungen verschiedener möglicher-isomerer Formen, insbesondere von Stereoisomeren, wie z.B. E- und Z-, threound erythro-, sowie optischen Isomeren, vorliegen. Es wird die Verwendung jeglicher isomerer Formen und von Mischungen isomerer Formen beansprucht. Bevorzugt werden L-Laktat-Derivate der Formel (I) eingesetzt.

Die Menge an einer oder mehreren Verbindungen der Formel (I) bei der erfindungsgemäßen Verwendung in Pflanzenschutzmitteln kann nach Wirkstoff und Formulierungstyp in weiten Grenzen variieren. Die Verbindungen der Formel (I) können in allen üblichen agrochemischen Formulierungen eingesetzt werden, bevorzugt in flüssigen. Gegenstand der vorliegenden Erfindung ist auch die Verwendung der Laktatester der Formel (I) zur Verbesserung der Wirkung auf Ebene der Pflanze als Tank-Mix-Additiv, d. h. dass die Laktatester erst direkt vor dem Ausbringen einer aus einer konzentrierten Formulierung hergestellten Spritzbrühe zugesetzt werden. Prinzipiell können die Verbindungen aber auch in feste Formulierungen eingebracht werden.

Die erfindungsgemäße Verwendung von Laktatestern der Formel (I) erfolgt beispielsweise in anwendungsfertigen Pflanzenschutzmitteln (Spritzbrühen), in denen der Gehalt an einem oder mehreren Laktatestern der Formel (I)
- 0,01 bis 3 % (Gewicht / Volumen),
- besonders bevorzugt 0,01 bis 1 % (Gewicht / Volumen),
- ganz besonders bevorzugt 0,02 bis 0,5 % (Gewicht / Volumen),
- insbesondere bevorzugt 0,03 bis 0,3 % (Gewicht / Volumen)
beträgt.

Enthält ein Pflanzenschutzmittel mehrere Laktatester, so ist die Mengenangabe als Gesamtgehalt aller Laktatester zu verstehen.

Gegenstand der vorliegenden Erfindung ist die Verwendung von Laktatester der Formel (I) zur Verbesserung der Wirkung von Pflanzenschutzmitteln auf der Ebene der Pflanze durch verbesserte Penetration von agrochemischen Wirkstoffen in Pflanzen.

Gegenstand der vorliegenden Erfindung ist die Verwendung von Laktatester der Formel (I) zur Verbesserung der Wirkung von Pflanzenschutzmitteln auf der Ebene der Pflanze durch verbesserte Retention von Pflanzenschutzmitteln an Pflanzen, insbesondere an Blättern.

Die oben aufgeführten allgemeinen oder in Vorzugsbereichen aufgeführten Restedefinitionen, Wertebereiche bzw. Erläuterungen können auch untereinander, also zwischen den jeweiligen Bereichen und Vorzugsbereichen beliebig kombiniert werden.

Da der Wirkmechanismus der Laktatester als Penetrationsförderer grundsätzlich unabhängig von der Art des eingesetzten agrochemischen Wirkstoffs ist, kommt ihre Verwendung in Pflanzenschutzmitteln enthaltend mindestens einen Wirkstoff, dessen biologische Wirksamkeit durch erhöhtes Eindringen in eine Kultur- oder Schadpflanze erhöht werden kann, in Frage.

Da auch der Wirkmechanismus der Laktatester als Retentionsförderer grundsätzlich unabhängig von der Art des eingesetzten agrochemischen Wirkstoffs ist, kommt ihre Verwendung in Pflanzenschutzmitteln enthaltend mindestens einen Wirkstoff, dessen biologische Wirksamkeit durch verbesserte Retention auf der Kultur- oder Schadpflanze erhöht werden kann, in Frage.

Vorzugsweise genannt seien Fungizide, Bakterizide, Insektizide, Akarizide, Nematizide, Herbizide, Pflanzenwuchsregulatoren, Pflanzennährstoffe und Repellents.

Als Beispiele für Fungizide seien genannt:
Inhibitoren der Nucleinsäure Synthese
   Benalaxyl, Benalaxyl-M, Bupirimat, Chiralaxyl, Clozylacon, Dimethirimol, Ethirimol, Furalaxyl, Hymexazol, Mefenoxam, Metalaxyl, Metalaxyl-M, Ofurace, Oxadixyl, Oxolinsäure
Inhibitoren der Mitose und Zellteilung
   Benomyl, Carbendazim, Diethofencarb, Ethaboxam, Fuberidazole, Pencycuron, Thiabendazol, Thiophanat-methyl, Zoxamid
Inhibitoren der Atmungskette Komplex I
   Diflumetorim
Inhibitoren der Atmungskette Komplex II
   Boscalid, Carboxin, Fenfuram, Flutolanil, Furametpyr, Furmecyclox, Mepronil, Oxycarboxin, Penthiopyrad, Thifluzamid
Inhibitoren der Atmungskette Komplex III
   Azoxystrobin, Cyazofamid, Dimoxystrobin, Enestcobin, Famoxadon, Fenamidon, Fluoxastrobin, Kresoximmethyl, Metominostrobin, Orysastrobin, Pyraclostrobin, Picoxystrobin, Trifloxystrobin
Entkoppler
   Dinocap, Fluazinam
Inhibitoren der ATP Produktion
   Fentinacetat, Fentinchlorid, Fentinhydroxid, Silthiofam
Inhibitoren der Aminosäure- und Proteinbiosynthese
   Andoprim, Blasticidin-S, Cyprodinil, Kasugamycin, Kasugamycinhydrochlorid Hydrat, Mepanipyrim, Pyrimethanil
Inhibitoren der Signal-Transduktion
   Fenpiclonil, Fludioxonil, Quinoxyfen
Inhibitoren der Fett- und Membran Synthese
   Chlozolinat, Iprodion, Procymidon, Vinclozolin
   Ampropylfos, Kalium-Ampropylfos, Edifenphos, Etridiazol, Iprobenfos (IBP), Isoprothiolan, Pyrazophos
   Tolclofos-methyl, Biphenyl
   Iodocarb, Propamocarb, Propamocarb hydrochlorid, Propamocarb-Fosetylat
Inhibitoren der Ergosterol Biosynthese
   Fenhexamid,
   Azaconazol, Bitertanol, Bromuconazol, Cyproconazol, Diclobutrazol, Difenoconazol, Diniconazol, Diniconazol-M, Epoxiconazol, Etaconazol, Fenarimol, Fenbuconazol, Fluquinconazol, Flurprimidol, Flusilazol, Flutriafol, Furconazol, Furconazol-cis, Hexaconazol, Imazalil, Imazalilsulfat Imibenconazol, Ipconazol, Metconazol, Myclobutanil, Nuarimol, Oxpoconazol, Paclobutrazol, Penconazol, Pefurazoat Prochloraz, Propiconazol, Prothioconazol, Pyrifenox, Simeconazol, Tebuconazol, Tetraconazol, Triadimefon, Triadimenol, Triflumizol Triforin, Triticonazol, Uniconazol, Voriconazol, Viniconazol,
   Aldimorph, Dodemorph, Dodemorphacetat, Fenpropidin, Fenpropimorph, Spiroxamin, Tridemorph,
   Naftifin, Pyributicarb, Terbinafin
Inhibitoren der Zellwand Synthese
   Benthiavalicarb, Bialaphos, Dimethomorph, Flumorph, Iprovalicarb, Mandipropamid, Polyoxins, Polyoxorim, Validamycin A
Inhibitoren der Melanin Biosynthese
   Carpropamid, Diclocymet, Fenoxanil, Phthalid, Pyroquilon, Tricyclazol Resistenzinduktion
   Acibenzolar-S-methyl, Probenazol, Tiadinil
Multisite
   Captafol, Captan, Chlorothalonil, Kupfersalze wie: Kupferhydroxid, Kupfernaphthenat, Kupferoxychlorid, Kupfersulfat, Kupferoxid, Oxin-Kupfer und Bordeaux Mischung, Dichlofluanid, Dithianon, Dodin, Dodin freie Base, Ferbam, Folpet, Fluorofolpet, Guazatin, Guazatinacetat, Iminoctadin, Iminoctadinalbesilat, Iminoctadintriacetat, Mankupfer, Mancozeb, Maneb, Metiram, Metiram Zink, Propineb, Schwefel und Schwefelpräparate enthaltend Calciumpolysulphid, Thiram, Tolylfluanid, Zineb, Ziram
Weitere Fungizide
   Amibromdol, Benthiazol, Bethoxazin, Capsimycin, Carvon, Chinomethionat, Chloropicrin, Cufraneb, Cyflufenamid, Cymoxanil, Dazomet, Debacarb, Diclomezine, Dichlorophen, Dicloran, Difenzoquat, Difenzoquat Methylsulphat, Diphenylamin, Ferimzon, Flumetover, Flusulfamid, Fluopicolid, Fluoroimid, Fosetyl-Aluminium, Fosetyl-Caclcium, Fosetyl-Natrium, Hexachlorobenzol, 8-Hydroxychinolinsulfat, Irumamycin, Methasulphocarb, Metrafenon, Methyl Isothiocyanat, Mildiomycin, Natamycin, Nickel dimethyldithiocarbamat, Nitrothal-isopropyl, Octhilinon, Oxamocarb, Oxyfenthiin, Pentachlorphenol und Salze, 2-Phenylphenol und Salze, Piperalin, Propanosin-Natrium, Proquinazid, Pyribencarb, Pyrrolnitrin, Quintozen, Tecloftalam, Tecnazen, Triazoxid, Trichlamid, Valiphenal , Zarilamid,
   2-(2-{[6-(3-Chlor-2-methylphenoxy)-5-fluorpyrimidin-4-yl]oxy}phenyl)-2-(methoxyimino)-N-methylacetamid,
   2-[[[[1-[3(1Fluor-2-phenylethyl)oxy] phenyl] ethyliden]amino]oxy]methyl]-alpha-(methoxyimino)-N-methyl-alpha-benzacetamid,
   cis-1-(4-Chlorphenyl)-2-(1H-1,2,4-triazol-1-yl)-cycloheptanol,
   1-[(4-Methoxyphenoxy)methyl]-2,2-dimethylpropyl-1H-imidazol-1-carbonsäure,
   2,3,5,6-Tetrachlor-4-(methylsulfonyl)-pyridin,
   2-Butoxy-6-iod-3-propyl-benzopyranon-4-on,
   2-Chlor-N-(2,3-dihydro-1,1,3-trimethyl-1H-inden-4-yl)-3-pyridincarboxamid,
   3,4,5-Trichlor-2,6-pyridindicarbonitril,
   3,4-Dichlor-N-(2-cyanophenyl)isothiazol-5-carboxamid (Isotianil)
   3-[5-(4-Chlorphenyl)-2,3-dimethylisoxazolidin-3-yl]pyridin,
   5-Chlor-6-(2,4,6-trifluorophenyl)-N-[(1R)-1,2,2-trimethylpropyl][1,2,4]triazolo[1,5-a]pyrimidin-7-amin,
   5-Chlor-7-(4-methylpiperidin-1-yl)-6-(2,4,6-trifluorophenyl)[1,2,4]triazolo[1,5-a]pyrimidin,
   5-Chlor-N-[(1R)-1,2-dimethylpropyl]-6-(2,4,6-trifluorophenyl)[1,2,4]triazolo[1,5-a]pyrimidin-7-amin,
   Methyl 2-[[[cyclopropyl[(4-methoxyphenyl)imino]methyl]thio]methyl]-.alpha.-(methoxymethylen)- benzacetat,
   Methyl 1-(2,3-dihydro-2,2-dimethyl-1H-inden-1-yl)-1H-imidazole-5-carboxylat,
   N-(3',4'-dichlor-5-fluorbiphenyl-2-yl)-3-(difluormethyl)-1-methyl-1H-pyrazol-4-carboxamid,
   N-(3-Ethyl-3,5,5-trimethyl-cyclohexyl)-3-formylamino-2-hydroxy-benzamid,
   N-(4-Chlor-2-nitrophenyl)-N-ethyl-4-methyl-benzenesulfonamid,
   N-(4-chlorbenzyl)-3-[3-methoxy-4-(prop-2-yn-1-yloxy)phenyl]propanamid,
   N-[(4-chlorphenyl)(cyano)methyl]-3-[3-methoxy-4-(prop-2-yn-1-yloxy)phenyl]propanamid,
   N-(5-Brom-3-chlorpyridin-2-yl)methyl-2,4-dichlomicotinamid,
   N-[1-(5-Brom-3-chloropyridin-2-yl)ethyl]-2,4-dichloronicotinamid,
   (2S)-N-[2-[4-[[3-(4-chlorophenyl)-2-propinyl]oxy]-3-methoxyphenyl]ethyl]- 3-methyl-2-[(methylsulfonyl)amino]-butanamid,
   N-{(Z)-[(cyclopropylmethoxy)imino][6-(difluormethoxy)-2,3-difluorphenyl]methyl}-2-benzacetamid,
   N-{2-[1,1'-bi(cyclopropyl)-2-yl]phenyl}-3-(difluormethyl)-1-methyl-1H-pyrazol-4-carboxamid,
   N-{2-[3-Chlor-5-(trifluormethyl)pyridin-2-yl]ethyl}-2-(trifluoromethyl)benzamid,
   N-ethyl-N-methyl-N'-{2-methyl-5-(trifluormethyl)-4-[3-(trimethylsilyl)propoxy]phenyl}imidoformamid,
   O-[1-[(4-Methoxyphenoxy)methyl]-2,2-dimethylpropyl]-1H-imidazol- 1- carbothioic acid,
   2-Amino-4-methyl-N-phenyl-5-thiazolcarboxamid,
   2,4-Dihydro-5-methoxy-2-methyl-4-[[[[1-[3-(trifluoromethyl)-phenyl]-ethyliden]-amino]-oxy]-methyl]-phenyl]-3H-1,2,4-triazol-3-on (CAS Nr. 185336-79-2),
   N-(6-Methoxy-3-pyridinyl)-cyclopropan carboxamid,

Als Beispiele für Bakterizide seien genannt:
Bronopol, Dichlorophen, Nitrapyrin, Nickel-Dimethyldithiocarbamat, Kasugamycin, Octhilinon, Furancarbonsäure, Oxytetracyclin, Probenazol, Streptomycin, Tecloftalam, Kupfersulfat und andere Kupfer-Zubereitungen.

Als Beispiele für Insektizide, Akarizide und Nematizide seien genannt:
Acetylcholinesterase (AChE) Inhibitoren
   Carbamate,
      zum Beispiel Alanycarb, Aldicarb, Aldoxycarb, Allyxycarb, Aminocarb, Bendiocarb, Benfuracarb, Bufencarb, Butacarb, Butocarboxim, Butoxycarboxim, Carbaryl, Carbofuran, Carbosulfan, Cloethocarb, Dimetilan, Ethiofencarb, Fenobucarb, Fenothiocarb, Formetanate, Furathiocarb, Isoprocarb, Metam-sodium, Methiocarb, Methomyl, Metolcarb, Oxamyl, Pirimicarb, Promecarb, Propoxur, Thiodicarb, Thiofanox, Trimethacarb, XMC, Xylylcarb, Triazamate
   Organophosphate,
      zum Beispiel Acephate, Azamethiphos, Azinphos (-methyl, -ethyl), Bromophos-ethyl, Bromfenvinfos (-methyl), Butathiofos, Cadusafos, Carbophenothion, Chlorethoxyfos, Chlorfenvinphos, Chlormephos, Chlorpyrifos(-methyl/-ethyl), Coumaphos, Cyanofenphos, Cyanophos, Chlorfenvinphos, Demeton-S-methyl, Demeton-S-methylsulphon, Dialifos, Diazinon, Dichlofenthion, Dichlorvos/DDVP, Dicrotophos, Dimethoate, Dimethylvinphos, Dioxabenzofos, Disulfoton, EPN, Ethion, Ethoprophos, Etrimfos, Famphur, Fenamiphos, Fenitrothion, Fensulfothion, Fenthion, Flupyrazofos, Fonofos, Formothion, Fosmethilan, Fosthiazate, Heptenophos, Iodofenphos, Iprobenfos, Isazofos, Isofenphos, Isopropyl O-salicylate, Isoxathion, Malathion, Mecarbam, Methacrifos, Methamidophos, Methidathion, Mevinphos, Monocrotophos, Naled, Omethoate, Oxydemeton-methyl, Parathion (-methyl/
      - ethyl), Phenthoate, Phorate, Phosalone, Phosmet, Phosphamidon, Phosphocarb, Phoxim, Pirimiphos (-methyl/-ethyl), Profenofos, Propaphos, Propetamphos, Prothiofos, Prothoate, Pyraclofos, Pyridaphenthion, Pyridathion, Quinalphos, Sebufos, Sulfotep, Sulprofos, Tebupirimfos, Temephos, Terbufos, Tetrachlorvinphos, Thiometon, Triazophos, Triclorfon, Vamidothion
Natrium-Kanal-Modulatoren / Spannungsabhängige Natrium-Kanal-Blocker
   Pyrethroide,
      zum Beispiel Acrinathrin, Allethrin (d-cis-trans, d-trans), Beta-Cyfluthrin, Bifenthrin, Bioallethrin, Bioallethrin-S-cyclopentyl-isomer, Bioethanomethrin, Biopermethrin, Bioresmethrin, Chlovaporthrin, Cis-Cypermethrin, Cis-Resmethrin, Cis-Permethrin, Clocythrin, Cycloprothrin, Cyfluthrin, Cyhalothrin, Cypermethrin (alpha-, beta-, theta-, zeta-), Cyphenothrin, Deltamethrin, Empenthrin (1R-isomer), Esfenvalerate, Etofenprox, Fenfluthrin, Fenpropathrin, Fenpyrithrin, Fenvalerate, Flubrocythrinate, Flucythrinate, Flufenprox, Flumethrin, Fluvalinate, Fubfenprox, Gamma-Cyhalothrin, Imiprothrin, Kadethrin, Lambda-Cyhalothrin, Metofluthrin, Permethrin (cis-, trans-), Phenothrin (1R-trans isomer), Prallethrin, Profluthrin, Protrifenbute, Pyresmethrin, Resmethrin, RU 15525, Silafluofen, Tau-Fluvalinate, Tefluthrin, Terallethrin, Tetramethrin (-1R- isomer), Tralomethrin, Transfluthrin, ZXI 8901, Pyrethrins (pyrethrum)
   DDT
   Oxadiazine,
      zum Beispiel Indoxacarb
   Semicarbazon,
      zum Beispiel Metaflumizon (BAS3201)
Acetylcholin-Rezeptor-Agonisten/-Antagonisten
   Chloronicotinyle,
      zum Beispiel Acetamiprid, Clothianidin, Dinotefuran, Imidacloprid, Nitenpyram, Ni thiazine, Thiacloprid, Thiamethoxam
   Nicotine, Bensultap, Cartap
Acetylcholin-Rezeptor-Modulatoren
   Spinosyne,
      zum Beispiel Spinosad
GABA-gesteuerte Chlorid-Kanal-Antagonisten
   Organochlorine,
      zum Beispiel Camphechlor, Chlordane, Endosulfan, Gamma-HCH, HCH, Heptachlor, Lindane, Methoxychlor
   Fiprole,
      zum Beispiel Acetoprole, Ethiprole, Fipronil, Pyrafluprole, Pyriprole, Vaniliprole
Chlorid-Kanal-Aktivatoren
   Mectine,
      zum Beispiel Abamectin, Emamectin, Emamectin-benzoate, Ivermectin, Lepimectin, Milbemycin
Juvenilhormon-Mimetika,
   zum Beispiel Diofenolan, Epofenonane, Fenoxycarb, Hydroprene, Kinoprene, Methoprene, Pyriproxifen, Triprene
Ecdysonagonisten/disruptoren
   Diacylhydrazine,
      zum Beispiel Chromafenozide, Halofenozide, Methoxyfenozide, Tebufenozide
Inhibitoren der Chitinbiosynthese
   Benzoylharnstoffe,
      zum Beispiel Bistrifluron, Chlofluazuron, Diflubenzuron, Fluazuron, Flucycloxuron, Flufenoxuron, Hexaflumuron, Lufenuron, Novaluron, Noviflumuron, Penfluron, Teflubenzuron, Triflumuron
   Buprofezin
   Cyromazine
Inhibitoren der oxidativen Phosphorylierung, ATP-Disruptoren
   Diafenthiuron
   Organozinnverbindungen,
      zum Beispiel Azocyclotin, Cyhexatin, Fenbutatin-oxide
Entkoppler der oxidativen Phosphorylierung durch Unterbrechung des H-Protongradienten
   Pyrrole,
      zum Beispiel Chlorfenapyr
   Dinitrophenole,
      zum Beispiel Binapacyrl, Dinobuton, Dinocap, DNOC, Meptyldinocap
Site-I-Elektronentransportinhibitoren
   METI's,
      zum Beispiel Fenazaquin, Fenpyroximate, Pyrimidifen, Pyridaben, Tebufenpyrad, Tolfenpyrad
   Hydramethylnon
   Dicofol
Site-II-Elektronentransportinhibitoren
   Rotenone
Site-III-Elektronentransportinhibitoren
   Acequinocyl, Fluacrypyrim
Mikrobielle Disruptoren der Insektendarmmembran
   Bacillus thuringiensis-Stämme
Inhibitoren der Fettsynthese
   Tetronsäuren,
   zum Beispiel Spirodiclofen, Spiromesifen,
   Tetramsäuren,
   zum Beispiel Spirotetramat, cis-3-(2,5-dimethylphenyl)-4-hydroxy-8-methoxy-1-azaspiro[4.5]dec-3-en-2-on
   Carboxamide,
   zum Beispiel Flonicamid
   Oktopaminerge Agonisten,
   zum Beispiel Amitraz
Inhibitoren der Magnesium-stimulierten ATPase,
   Propargite
   Nereistoxin-Analoge,
   zum Beispiel Thiocyclam hydrogen oxalate, Thiosultap-sodium
Agonisten des Ryanodin-Rezeptors,
   Benzoesäuredicarboxamide,
   zum Beispiel Flubendiamid
   Anthranilamide,
   zum Beispiel Rynaxypyr (3-bromo-N-{4-chloro-2-methyl-6-[(methylamino)carbonyl]phenyl}-1-(3-chloropyridin-2-yl)-1H-pyrazole-5-carboxamide)
Biologika, Hormone oder Pheromone
   Azadirachtin, Bacillus spec., Beauveria spec., Codlemone, Metarrhizium spec., Paecilomyces spec., Thuringiensin, Verticillium spec.
Wirkstoffe mit unbekannten oder nicht spezifischen Wirkmechanismen
   Begasungsmittel,
      zum Beispiel Aluminium phosphide, Methyl bromide, Sulfuryl fluoride
   Fraßhemmer,
      zum Beispiel Cryolite, Flonicamid, Pymetrozine
   Milbenwachstumsinhibitoren,
      zum Beispiel Clofentezine, Etoxazole, Hexythiazox
   Amidoflumet, Benclothiaz, Benzoximate, Bifenazate, Bromopropylate, Buprofezin, Chinomethionat, Chlordimeform, Chlorobenzilate, Chloropicrin, Clothiazoben, Cycloprene, Cyflumetofen, Dicyclanil, Fenoxacrim, Fentrifanil, Flubenzimine, Flufenerim, Flutenzin, Gossyplure, Hydramethylnone, Japonilure, Metoxadiazone, Petroleum, Piperonyl butoxide, Potassium oleate, Pyridalyl, Sulfluramid, Tetradifon, Tetrasul, Triarathene,Verbutin
Als Beispiele für Herbizide seien genannt:
   Anilide, wie z.B. Diflufenican und Propanil; Arylcarbonsäuren, wie z.B. Dichlorpicolinsäure, Dicamba und Picloram; Aryloxyalkansäuren, wie z.B. 2,4-D, 2,4-DB, 2,4-DP, Fluroxypyr, MCPA, MCPP und Triclopyr; Aryloxy-phenoxy-alkansäureester, wie z.B. Diclofop-methyl, Fenoxapropethyl, Fluazifop-butyl, Haloxyfop-methyl und Quizalofop-ethyl; Azinone, wie z.B. Chloridazon und Norflurazon; Carbamate, wie z.B. Chlorpropham, Desmedipham, Phenmedipham und Propham; Chloracetanilide, wie z.B. Alachlor, Acetochlor, Butachlor, Metazachlor, Metolachlor, Pretilachlor und Propachlor; Dinitroaniline, wie z.B. Oryzalin, Pendimethalin und Trifluralin; Diphenylether, wie z.B. Acifluorfen, Bifenox, Fluoroglycofen, Fomesafen, Halosafen, Lactofen und Oxyfluorfen; Harnstoffe, wie z.B. Chlortoluron, Diuron, Fluometuron, Isoproturon, Linuron und Methabenzthiazuron; Hydroxylamine, wie z.B. Alloxydim, Clethodim, Cycloxydim, Sethoxydim und Tralkoxydim; Imidazolinone, wie z.B. Imazethapyr, Imazamethabenz, Imazapyr und Imazaquin; Nitrile, wie z.B. Bromoxynil, Dichlobenil und Ioxynil; Oxyacetamide, wie z.B. Mefenacet; Sulfonylharnstoffe, wie z.B. Amidosulfuron, Bensulfuron-methyl, Chlorimuron-ethyl, Chlorsulfuron, Cinosulfuron, Metsulfuron-methyl, Nicosulfuron, Primisulfuron, Pyrazosulfuron-ethyl, Thifensulfuron-methyl, Triasulfuron und Tribenuron-methyl; Thiolcarbamate, wie z.B. Butylate, Cycloate, Diallate, EPTC, Esprocarb, Molinate, Prosulfocarb, Thiobencarb und Triallate; Triazine, wie z.B. Atrazin, Cyanazin, Simazin, Simetryne, Terbutryne und Terbutylazin; Triazinone, wie z.B. Hexazinon, Metamitron und Metribuzin; Sonstige, wie z.B. Aminotriazol, 4-Amino-N-(1,1-dimetylethyl)-4,5-dihydro-3-(1-methylethyl)-5-oxo-1H-1,2,4-triazole-1-carboxamid, Benfuresate, Bentazone, Cinmethylin, Clomazone, Clopyralid, Difenzoquat, Dithiopyr, Ethofumesate, Fluorochloridone, Glufosinate, Glyphosate, Isoxaben, Pyridate, Quinchlorac, Quinmerac, Sulphosate und Tridiphane.

Als Beispiele für Pflanzenwuchsregulatoren seien Chlorcholinchlorid, Thidiazuron und Ethephon genannt. Außerdem Auxine einschliesslich der synthetischen wie NAA, 2,4-D, Gibberellinsäure, Cytokinine einschliesslich der synthetischen wie Benzyladenin, Kinetin, Abszissinsäure, Salicylsäure, Jasmonsäure bzw. deren Ester und Brassinosteroide

Als Beispiele für Pflanzennährstoffe seien übliche anorganische oder organische Dünger zur Versorgung von Pflanzen mit Makro- und/oder Mikronährstoffen genannt.

Als Beispiele für Repellents seien Diethyltolylamid, Ethylhexandiol und Butopyronoxyl genannt.

Bevorzugte Beispiele für Fungizide sind die Strobilurin-Fungizide, wie z.B. 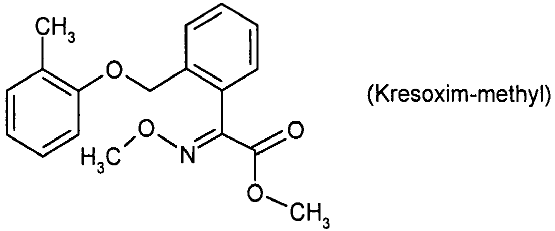 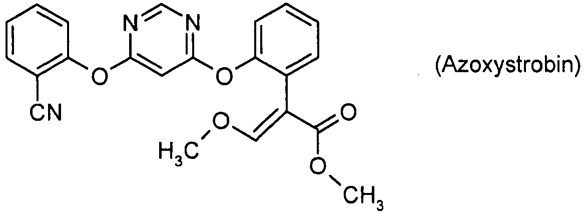 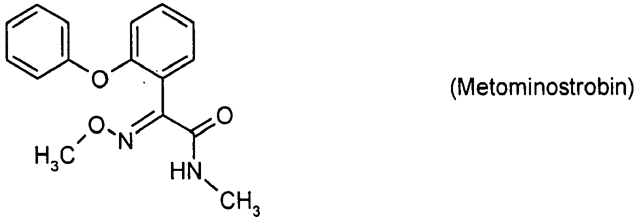 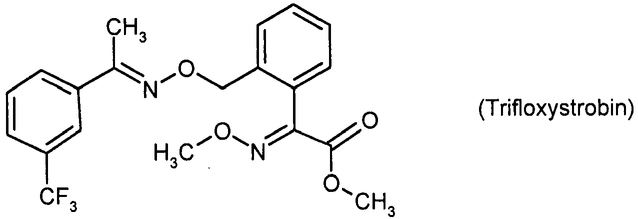 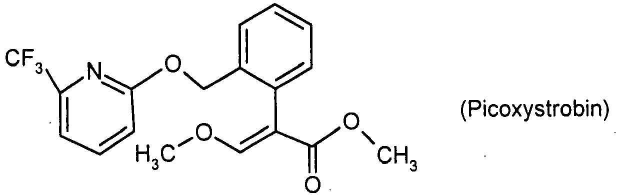 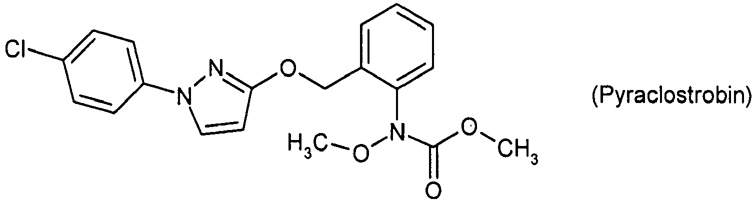 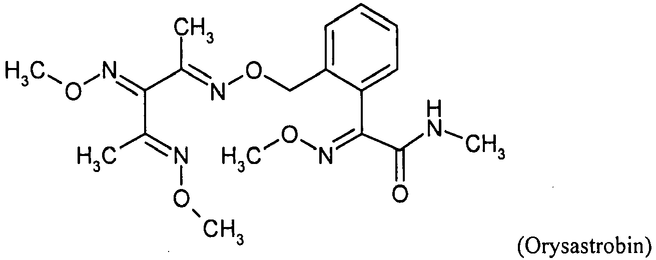 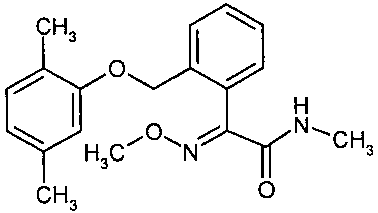 und 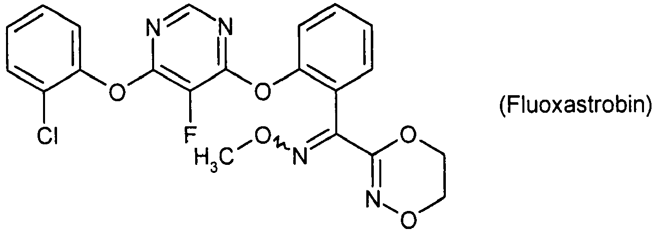 sowie die Azolfungizide, wie 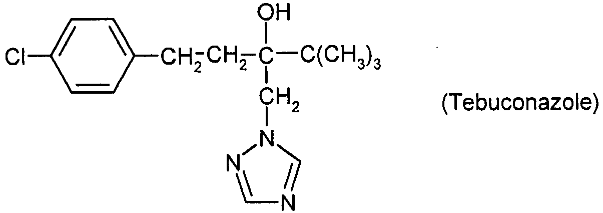 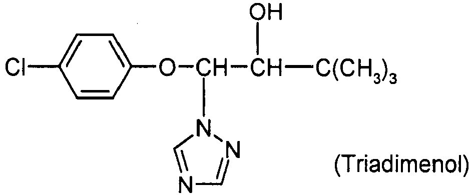 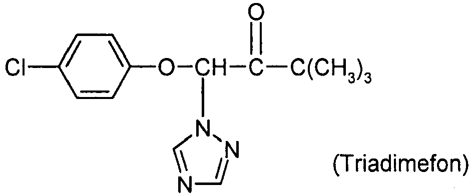 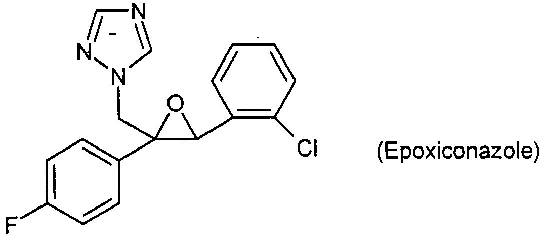 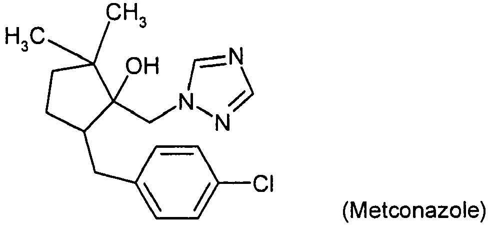 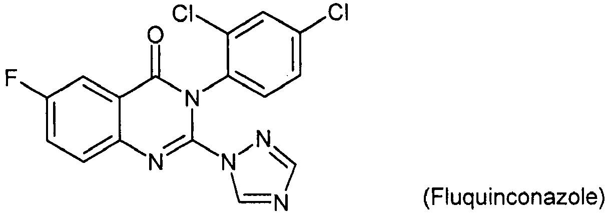 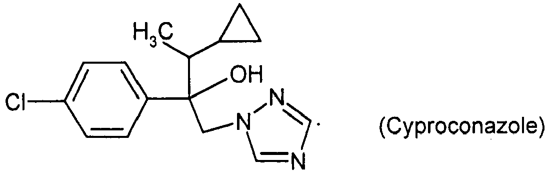 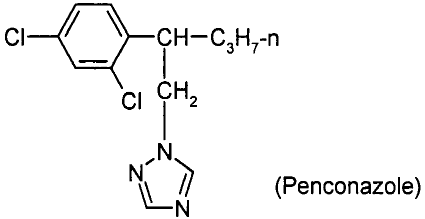 und

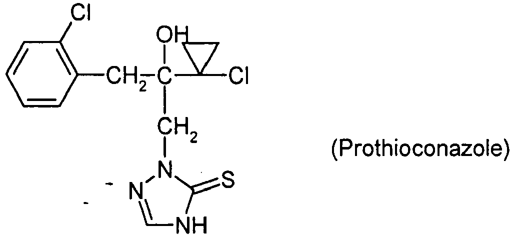

Als bevorzugte Beispiele für Fungizide seien Prothioconazole, Fluoxastrobin, Trifloxystrobin, Spiroxamine und Tebuconazole genannt.

Zu den in Frage kommenden Formulierungstypen gehören alle Formulierungen, die auf Pflanzen oder deren Vermehrungsgut ausgebracht werden. Die zu deren Herstellung verwendeten Verfahren sind dem Fachmann allgemein geläufig und beispielsweise beschrieben in Winnacker-Küchler, "Chemische Technologie" Band 7, C. Hanser Verlag München, 4. Aufl., 1986; J.W. van Valkenburg, "Pesticide Formulations", Marcel Dekker N.Y., 1973, K. Martens, "Spray Drying Handbook", 3rd Ed. 1979, G. Goodwin Ltd., London, oder Mollet, Grubenmann, "Formulierungstechnik", Wiley-VCH-Verlag, Weinheim, 2000.

Formulierungstypen sind alle die im "Manual on development and use of FAO and WHO specifications for pesticides" (FAO and WHO, 2002, appendix E) erwähnten (jeweils Verwendung der GCPF-Formulierungskodes mit englischer Abkürzung und Bezeichnung): AB Grain bait; AE Aerosol dispenser; AL Any other liquid; AP Any other powder; CF Capsule Suspension for Seed Treatment; CG Encapsulated granule; CL Contact liquid or gel; CP Contact powder; CS Capsule suspension; DC Dispersible concentrate; DP Dustable powder; DS Powder for dry seed treatment; DT Tablet for direct application; EC Emulsifiable concentrate; ED Electrochargeable liquid; EG Emulsifiable Granule; EO Emulsion, water in oil; EP emulsifiable powder, ES Emulsion for seed treatment; EW Emulsion, oil in water; FG Fine granule; FS Flowable concentrate for seed treatment; GF Gel for Seed Treatment; GG Macrogranule; GL Emulsifiable gel; GP Flo-dust; GR Granule; GS Grease; GW Water soluble gel; HN Hot fogging concentrate; KK Combi-pack solid/liquid; KL Combi-pack liquid/liquid; KN Cold fogging concentrate; KP Combi-pack solid/solid; LA Lacquer; LS Solution for seed treatment; ME Micro-emulsion; MG Microgranule; OD oil dispersion, OF Oil miscible flowable concentrate/oil miscible suspension; OL Oil miscible liquid; OP Oil dispersible powder; PA Paste; PC Gel or paste concentrate; PO Pour-on; PR Plant rodlet; PS Seed coated with a pesticide; PT Pellet; RB Bait (ready for use); SA Spot-on; SC suspension concentrate, SD suspension concentrate for direct application, SE Suspo-emulsion; SG Water soluble granule; SL Soluble concentrate; SO Spreading oil; SP Water soluble powder; SS Water soluble powder for seed treatment; ST Water soluble tablet; SU Ultra-low volume (ULV) suspension; TB Tablet; TC Technical material; TK Technical concentrate; UL Ultra-low volume (ULV) liquid; VP Vapour releasing product; WG Water dispersible granules; WP Wettable powder; WS Water dispersible powder for slurry seed treatment; WT Water dispersible tablet; XX Others.

Bevorzugt sind flüssige Formulierungstypen. Hierzu gehören die Formulierungstypen DC (GCPF-Formulierungskode für dispergierbares Konzentrat); EC (GCPF-Formulierüngskode für Emulsionskonzentrat); EW (GCPF-Formulierungskode für Öl-in-Wasser-Emulsion); ES (GCPF-Formulierungskode für Emulsionsbeize), FS (GCPF-Formulierungskode für Mehrphasenkonzentrat zur Saatgutbehandlung), EO (GCPF-Formulierungskode für Wasser in Öl Emulsion; ME (GCPF-Formulierungskode für Mikroemulsion; SE (GCPF-Formulierungskode für Suspoemulsion); SL (GCPF-Formulierungskode für Flüssigformulierung); CS (GCPF-Formulierungskode für Suspension bestehend aus Kapseln) und AL (GCPF-Formulierungskode für gebrauchsfertige Flüssigformulierung).

Besonders bevorzugt für eine erfindungsgemäße Verwendung der Laktatester der Formel (I) sind Emulsionskonzentrate (Formulierungstyp EC).

Als Zusatzstoffe, die in den erfindungsgemäßen, vorzugsweise flüssigen Formulierungen enthalten sein können, kommen alle üblichen Formulierhilfsmittel in Frage, wie organische Solventien, Entschäumer, Emulgatoren, Dispergiermittel, Konservierungsmittel, Säuren und Basen, Farbstoffe, Füllstoffe, Penetrationsförderer und auch Wasser.

Als Entschäumer kommen übliche, in Formulierungen von agrochemischen Wirkstoffen vorhandene Entschäumer in Frage. Beispielhaft genannt seien Silikonöle, Dispersionen von Silikonölen, Magnesiumstearat, Phosphin- und Phosphonsäuren, insbesondere Fluowet PL 80®.

Als organische Solventien kommen dabei alle üblichen organischen Lösungsmittel in Betracht, welche die eingesetzten agrochemischen Wirkstoffe gut lösen. Vorzugsweise genannt seien aliphatische und aromatische, gegebenenfalls halogenierte Kohlenwasserstoffe, wie Toluol, Xylol, Solvesso®, Mineralöle, wie Testbenzin, Petroleum, Alkylbenzole und Spindelöl, weiterhin Tetrachlormethan, Chloroform, Methylenchlorid und Dichlormethan, außerdem Ester, wie Ethylacetat, ferner Lactone, wie Butyrolacton, außerdem Lactame, wie N-Methylpyrrolidon, N-Octylpyrrolidon, N-Dodecyl-pyrrolidon, und N-Methylcaprolactam, und auch Alkancarbonsäureamide, wie Decancarbonsäure-dimethylamid und Octancarbonsäure-dimethylamid, γ-Butyrolacton, sowie Dimethylformamid.

Als Emulgatoren kommen übliche, in Formulierungen von agrochemischen Wirkstoffen vorhandene oberflächenative Substanzen in Frage. Beispielhaft genannt seien ethoxylierte Nonylphenole, Polyethylenglykolether von linearen Alkoholen, Umsetzungsprodukte von Alkylphenolen mit Ethylenoxid und/oder Propylenoxid, Ethylenoxid- Propylenoxid-Blockcopolymere, Polyethylenglykole und Polypropylenglykole, weiterhin Fettsäureester, Fettsäurepolyglykoletherester, Alkylsulfonate, Alkylsulfate, Arylsulfate, ethoxylierte Arylalkylphenole, wie zum Beispiel Tristyryl-phenol-ethoxylat mit durchschnittlich 16 Ethylenoxid-Einheiten pro Molekül, weiterhin ethoxylierte und propoxylierte Arylalkylphenole sowie sulfatierte oder phosphatierte Arylalkylphenol-ethoxylate bzw. -ethoxy- und -propoxylate. Besonders bevorzugt sind Tristryl-phenol-alkoxylate und Fettsäurepolyglykoletherester. Ganz besonders bevorzugt sind Tristyryl-phenol-ethoxylate, Tristyryl-phenol-ethoxy-propoxylate und Ricinusölpolyglykoletherestern, jeweils einzeln oder in Mischungen.

Als Dispergiermittel kommen alle üblicherweise in Pflanzenschutzmitteln für diesen Zweck eingesetzten Substanzen in Betracht. Vorzugsweise genannt seien neben den oben unter Emulgatoren genannten Beispielen natürliche und synthetische, wasserlösliche Polymere, wie Gelatine, Stärke und Cellulosederivate, insbesondere Celluloseester und Celluloseether, ferner Polyvinylalkohol, Polyvinylpyrrolidon, Polyacrylsäure, Polymethacrylsäure und Co-Polymerisate aus (Meth)-acrylsäure und (Meth)acrylsäureestern, und außerdem auch mit Alkalimetallhydroxid neutralisierte Co-Polymerisate aus Methacrylsäure und Methacrylsäureester.

Als Konservierungsmittel kommen alle üblicherweise für diesen Zweck in Pflanzenbehandlungsmitteln vorhandenen Substanzen in Betracht. Als Beispiele genannt seien Preventol® und Proxel®.

Als Farbstoffe kommen alle für die Herstellung von Pflanzenschutzmitteln üblichen anorganischen oder organischen Farbstoffe in Frage. Beispielhaft genannt seien Titandioxid, Farbruß, Zinkoxid und Blaupigmente.

Als Füllstoffe kommen alle üblicherweise für diesen Zweck in Pflanzenschutzmitteln eingesetzten Substanzen in Betracht. Vorzugsweise genannt seien anorganische Partikel, wie Carbonate, Silikate und Oxide mit einer mittleren Teilchengröße von 0,005 bis 5 µm, besonders bevorzugt von 0,02 bis 2 µm. Beispielhaft erwähnt seien Siliziumdioxid, sogenannte hochdisperse Kieselsäure, Kieselgele, sowie natürliche und synthetische Silikate und Alumosilikate.

Als Verbindungen, die als Emulsions-Stabilisatoren und/oder Kristallisationsinhibitoren wirken, kommen alle üblicherweise für diesen Zweck in Pflanzenschutzmitteln eingesetzte Substanzen in Betracht.

Als Penetrationsförderer kommen beispielsweise Alkanol-alkoxylate der Formel (I)

R-O-(-AO)ₘ-R' (I)

in welcher
- R: für geradkettiges oder verzweigtes Alkyl mit 4 bis 20 Kohlenstoffatomen steht,
- R': für H, Methyl, Ethyl, n-Propyl, i-Propyl, n-Butyl, i-Butyl, t-Butyl, n-Pentyl oder n-Hexyl steht,
- AO: für einen Ethylenoxid-Rest, einen Propylenoxid-Rest, einen Butylenoxid-Rest oder für Gemische aus Ethylenoxid- und Propylenoxid-Resten oder für Gemische aus Ethylenoxid- und Butylenoxid-Resten steht und
- m: für Zahlen von 2 bis 30 steht,

in Betracht. Bei diesen Substanzen handelt es sich um Gemische von Stoffen des angegebenen Typs mit unterschiedlichen Kettenlängen. Für die Indices errechnen sich deshalb Durchschnittswerte, die auch von ganzen Zahlen abweichen können.

Als Penetrationsförderer kommen weiter übliche, in Formulierungen von agrochemischen Wirkstoffen eingesetzte oberflächenaktive Substanzen in Frage. Beispielhaft genannt seien ethoxylierte Nonylphenole, Tributylphenolpolyglykolether, Umsetzungsprodukte von Alkylphenolen mit Ethylenoxid und/oder Propylenoxid, alkoxylierte Alkylamine, alkoxylierte Mono-, Di- oder Triglyceride, Polyethylenoxid-Sorbitan-Fettsäureester weiterhin Fettsäurepolyglykoletherester, Diester und Diether von Polyalkylenoxiden, Fettsäureesterethoxylate sowie Alkylethoxylate und Alkylarylethoxylate, die phosphatiert und gegebenenfalls mit Basen neutralisiert sein können. Als anionische Tenside kommen weiter alle üblicherweise in agrochemischen Mitteln einsetzbaren Substanzen dieses Typs in Frage. Bevorzugt sind Alkalimetall-, Ammonium- und Erdalkalimetall-Salze von Alkylsulfonsäuren oder Alkylarylsulfonsäuren, sowie Alkyl(poly)ethylenglykolethersulfaten bzw. -sulfonaten. Als nicht oberflächenaktive Penetrationsförderer seien Fettsäureester, Mono- und Diester von Dicarbonsäuren sowie Phosphatester genannt.

Der Gehalt an den einzelnen Komponenten kann in den erfindungsgemäßen Formulierungen innerhalb eines größeren Bereichs variiert werden.

Die Herstellung der erfindungsgemäßen Formulierungen erfolgt z.B. in der Weise, dass man die Komponenten in den jeweils gewünschten Verhältnissen miteinander vermischt. Handelt es sich bei dem agrochemischen Wirkstoff um eine Festsubstanz, so setzt man diesen im allgemeinen entweder in fein gemahlener Form oder in Form einer Lösung oder Suspension in einem organischen Solvens oder Wasser ein. Ist der agrochemische Wirkstoff flüssig, so erübrigt sich häufig die Verwendung eines organischen Lösungsmittels. Es ist außerdem möglich, einen festen agrochemischen Wirkstoff in Form einer Schmelze einzusetzen.

Die Temperaturen können bei der Durchführung des Verfahrens in einem bestimmten Bereich variiert werden. Man arbeitet im allgemeinen bei Temperaturen zwischen 0°C und 80°C, vorzugsweise zwischen 10°C und 60°C.

Bei der Durchführung des erfindungsgemäßen Verfahrens geht man im Allgemeinen so vor, dass man die Laktatester (I) mit einem oder mehreren Wirkstoffen sowie gegebenenfalls mit Zusatzstoffen vermischt. Die Reihenfolge, in der die Komponenten miteinander vermischt werden, ist beliebig.

Zur Durchführung des erfindungsgemäßen Verfahrens kommen übliche Geräte in Betracht, die zur Herstellung von agrochemischen Formulierungen eingesetzt werden.

Als Applikationsformen können alle, dem Fachmann als gebräuchlich bekannten Verfahren verwendet werden; beispielsweise genannt seien: Spritzen, Tauchen, Nebeln sowie eine Reihe spezieller Verfahren zur direkten unter- oder oberirdischen Behandlung von gesamten Pflanzen oder Teilen (Saatgut, Wurzel, Stolonen, Stängel, Stamm, Blatt), wie beispielsweise Stamminjektion bei Bäumen oder Stängelbandagen bei perennierenden Pflanzen, und eine Reihe spezieller indirekter Applikationsverfahren.

Der Begriff "Schadorganismen" umfasst alle Formen von Organismen, die im entsprechenden Einsatzgebiet ökonomische und/oder gesundheitliche Schäden verursachen. Bevorzugt sind pflanzliche und tierische Schadorganismen sowie Organismen, die Krankheiten verursachen, besonders bevorzugt sind terrestrische und aquatische Ungräser und Unkräuter, Algen, Moose, Insekten, Milben Nematoden, Nager, Pilze, Bakterien und Viren.

Die jeweilige flächen- und/oder objektbezogene Aufwandmenge der Pflanzenschutzmittel unterschiedlichster Formulierungstypen zur Bekämpfung der genannten Schadorganismen variiert sehr stark. Im Allgemeinen werden hierfür die, dem Fachmann als gebräuchlich für das jeweilige Einsatzgebiet bekannten Applikationsmedien in den gebräuchlichen Mengen eingesetzt; wie beispielsweise von mehreren hundert Liter Wasser pro Hektar bei Standard-Spritzverfahren über wenige Liter Öl pro Hektar bei der 'Ultra Low Volume'-Flugzeugapplikation bis hin zu wenigen Millilitern einer physiologischen Lösungen bei Injektionsverfahren. Die Konzentrationen der erfindungsgemäßen Pflanzenschutzmittel in den entsprechenden Applikationsmedien variieren daher in einem weiten Bereich und sind vom jeweiligen Einsatzgebiet abhängig. Im Allgemeinen werden Konzentrationen verwendet, die dem Fachmann als gebräuchlich für das jeweilige Einsatzgebiet bekannt sind. Bevorzugt sind Konzentrationen von 0,01 Gew.% bis 99 Gew.%, besonders bevorzugt von 0,1 Gew.% bis 90 Gew.%.

Die erfindungsgemäßen Pflanzenschutzmittel können z.B. in den für Flüssigpräparate üblichen Zubereitungsformen entweder als solche oder nach vorherigem Verdünnen mit Wasser ausgebracht werden, also z.B. als Emulsionen, Suspensionen oder Lösungen. Die Anwendung erfolgt dabei nach üblichen Methoden, also z.B. durch Verspritzen, Gießen oder Injizieren.

Die Aufwandmenge an den erfindungsgemäßen Pflanzenschutzmittel kann innerhalb eines größeren Bereiches variiert werden. Sie richtet sich nach den jeweiligen agrochemischen Wirkstoffen und nach deren Gehalt in den Pflanzenschutzmitteln.

Die erfindungsgemäß behandelten Pflanzen sind, soweit es den Einsatz an Herbiziden betrifft, alle Arten von Unkräutern. Was den Schutz von Kulturpflanzen durch Applikation von beispielsweise Fungiziden und Insektiziden betrifft, ist die Anwendung in wirtschaftlich bedeutenden, beispielsweise auch transgenen Kulturen von Nutz- und Zierpflanzen, z.B. von Getreide, wie Weizen, Gerste, Roggen, Hafer, Hirse, Reis, Maniok und Mais, oder auch Kulturen von Zuckerrübe, Baumwolle, Soja, Raps, Kartoffel, Tomate, Erbse und anderen Gemüsesorten bevorzugt.

Die Erfindung wird durch die Beispiele näher erläutert, ohne sie darauf zu beschränken.

### Beispiele

Additive, die als Penetrationsförderer auf der Ebene der Kutikula wirken, seien nachfolgend als Akzelerator-Additive bezeichnet (vgl. Schönherr und Baur, 1994, Pesticide Science 42, 185-208). Akzelerator-Additive zeichnen sich dadurch aus, dass sie aus der wässrigen Spritzbrühe und/oder aus dem Spritzbelag in die Kutikula eindringen und dadurch die Stoffbeweglichkeit (Mobilität) von Wirkstoffen In der Kutikula erhöhen können. Andere Additive wie Polyethylenglykol wirken dagegen nur im Spritzbelag (über die Flüssigphase) oder wirken nur als Netzmittel wie z.B. Natriumdodecylsulfat.

In diesem Test wird der Einfluss von Additiven auf die Penetrationseigenschaften anderer Substanzen auf der Ebene der Kutikula bestimmt. Dabei wird die Mobilität einer Testsubstanz in der Kutikula ohne und mit einem Additiv über eine Desorptionsmethode gemessen. Die Methode ist detailliert in der Literatur veröffentlicht (Baur et al., 1997, Pesticide Science, 51, 131-152) und lediglich die Prinzipien und Abweichungen werden nachfolgend beschrieben.

Als Testsubstanz mit der Funktion eines Tracers wurde hier eine radioaktiv markierte schwache organische Säure ausgewählt. Als Pflanzenmaterial wurden die enzymatisch isolierten Blattkutikeln der Oberseite von Birnenblättern von Freilandbäumen verwendet. Die Kutikeln wurden in speziell angefertigte Diffusionszellen aus Edelstahl eingebaut. Der Tracer wurde in einem Citratpuffer bei pH 3 in gelöstem Zustand auf die ursprünglich dem Blattinneren zugewandten Seite appliziert. Diese Innenseite nimmt die kleine radioaktive Menge des Tracers in der nicht dissoziierten Säureform leicht auf. Anschließend wurde diese Innenseite abgedeckt und bei 100% Luftfeuchte gehalten. Die normalerweise luftexponierte, morphologische Außenseite der Blattkutikula wurde dann mit einem Puffer (pH7), der Rezeptorlösung in Kontakt gebracht und die Desorption gestartet. Die penetrierte Säureform der Testsubstanz wird durch den Rezeptor dissoziiert und die Desorption erfolgt einer Kinetik erster Ordnung. Die Desorptionskonstante ist proportional der Mobilität des Tracers in der Kutikula.

Nach mindestens zwei Zeiten zur Bestimmung dieser Konstanten wird nun die Desorption mit einem Puffer fortgesetzt, der zusätzlich das zu testende Additiv enthält. Je nach Eigenschaft des Additives kommt es nun zur Sorption des Additives in der Kutikula und je nach Wirksamkeit als Weichmacher für die Kutikula erhöht sich die Mobilität des Tracers in der Kutikula. Dies äußert sich in einer erhöhten Desorptionskonstante und das Verhältnis der Steigungen mit Additiv zu dem ohne Additiv beschreibt den Effekt des Additives auf der Ebene der Kutikula als Penetrationsförderer zu wirken. Der Vergleich des mittleren Effektes verschiedener Additive gibt damit deren Wirksamkeit als Weichmacher der Kutikula zu agieren wieder.

Wie anhand der in Tabelle 1 aufgeführten Beispiele zu erkennen ist, wirkt 2-Ethylhexyllaktat sehr wirkungsvoll als Weichmacher. Bei der eingesetzten Alternative zum Laktatester (Genapol ® X-060, Clariant, Sulzbach, Deutschland) handelt es sich um einen bekanntermaßen guten, handelsüblichen Penetrationsförderer für Formulierungen, während Tween ® 80 (Uniqema, Emmerich, Deutschland) kaum Weichmacher-Eigenschaften aufweist.

**Tabelle 1**

| *Beispiel* | *Additiv* | *Konzentration (g*/*l)* | *Mittlerer Effekt* |
|---|---|---|---|
| 1 | Tween ® 80 | 2 | 4 |
| 2 | Genapol ® X-060 | 1 | 42,3 |
| 3 | 2-Ethylhexyllaktat | 1 | 45 |

### Retentionstest

Unter Retention versteht man die Sprühnebelhaftung an Oberflächen, z.B. Pflanzen oder Pflanzenteilen (Blätter) nach Spritzapplikation. Die Retention hängt sowohl von der Zusammensetzung der Spritzbrühe als auch von der Beschaffenheit der behandelten Oberfläche ab.

Die Retention einer Spritzbrühe (wässrige Lösung des angegebenen Additivs) wurde mit einem schlecht benetzbaren Blatt im Vergleich zu einer Bezugsoberfläche mit vollständiger Retention ermittelt. Die berichteten Ergebnisse wurden mit Primärblättern von Gerstenkeimlingen erzielt, die im Gewächshaus (18°C, 80% Luftfeuchte, 16h Licht) angezogen wurden. Einzelne abgeschnittene Blätter wurden in einer Spritzkabine standardmäßig mit einem Spritzschlitten behandelt - Flachstrahl-Düse: XR 11002 VS; Druck: 3 bar; 300 l/ha. Gewicht und Blattfläche wurden vor der Behandlung bestimmt und der anhaftende Spritzbelag entsprechend gravimetrisch bestimmt und auf die Blattfläche normiert. Als Bezugsoberfläche für 100% Retention dient Vliespapier. Mindestens 5 einzelne Blätter wurden pro Spritzbrühenvariante behandelt und die berechneten Retentionen anschließend gemittelt. Als Negativ-Kontrolle (geringste Retention) wurde eine Testserie mit dem Verspritzen von reinem Leitungswasser als Spritzbrühe auf Gerstenkeimlingblätter durchgeführt.

Bei einer Konzentration von 0,3 g/l (Löslichkeitsgrenze in Wasser in Abwesenheit von Emulgator) steigert EHL die Retention erheblich. Der zugesetzte Emulgator (Pluronic ® PE 10500, BASF, Ludwigshafen, Deutschland) hat keinen Einfluss auf die Retention.

**Tabelle 2**

| *Beispiel* | *Additiv* | *Konzentration (g*/*l)* | *Retention* |
|---|---|---|---|
| 1 | Kein Additiv | | 0% |
| 2 | Pluronic ® PE 10500 | 0,2 | 0,6% |
| 3 | 2-Ethylhexyllaktat | 0,3 | 60,6% |
| 4 | 2-Ethylhexyllaktat (+ 0.2 g/l Pluronic ® PE 10500) | 3 | 61% |

## Patentansprüche

1. Verwendung von Laktatestern der Formel (I) 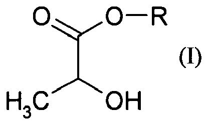 worin R für unverzweigtes oder verzweigtes, gesättigtes oder ungesättigtes C₄-C₈-Alkyl steht,
zur Verbesserung der Wirkung von Pflanzenschutzmitteln auf der Ebene der Pflanze.

2. Verfahren zur Verbesserung der Wirkung von Pflanzenschutzmitteln beim Ausbringen von wässrigen Spritzbrühen, **dadurch gekennzeichnet, dass** man den Spritzbrühen mindestens einen Laktatester der Formel (I) gemäß Anspruch 1 zusetzt.

3. Verwendung nach Anspruch 1, worin R für 2-Ethylhexyl steht.

4. Verfahren nach Anspruch 2, worin R für 2-Ethylhexyl steht.

## Claims

1. Use of lactate esters of the formula (I) 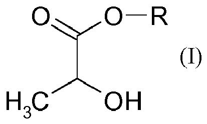 in which R represents straight-chain or branched saturated or unsaturated C₄-C₈-alkyl,
for improving the activity of crop protection compositions at plant level.

2. Method for improving the activity of crop protection compositions when applying aqueous spray liquors, **characterized in that** at least one lactate ester of the formula (I) according to Claim 1 is added to the spray liquors.

3. Use according to Claim 1, wherein R represents 2-ethylhexyl.

4. Method according to Claim 2, wherein R represents 2-ethylhexyl.

## Revendications

1. Utilisation d'esters de lactate de formule (I) 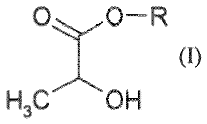 dans laquelle R représente alkyle en C₄-C₈ non ramifié ou ramifié, saturé ou insaturé,
pour améliorer l'action de produits phytosanitaires au niveau de la plante.

2. Procédé d'amélioration de l'action de produits phytosanitaires lors de l'application de bouillies de pulvérisation aqueuses, **caractérisé en ce qu'**au moins un ester de lactate de formule (I) selon la revendication 1 est ajouté aux bouillies de pulvérisation.

3. Utilisation selon la revendication 1, dans laquelle R représente 2-éthylhexyle.

4. Procédé selon la revendication 2, dans lequel R représente 2-éthylhexyle.
